(19) Europäisches Patentamt
European Patent Office
Office européen des brevets

(11) **EP 3 612 845 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **18723714.4**

(22) Anmeldetag: **18.04.2018**

(51) Int Cl.:
*G01P 5/26* (2006.01)  *G01J 3/44* (2006.01)
*G01N 21/65* (2006.01)  *G01N 21/85* (2006.01)

(86) Internationale Anmeldenummer:
**PCT/EP2018/059946**

(87) Internationale Veröffentlichungsnummer:
**WO 2018/192996 (25.10.2018 Gazette 2018/43)**

(54) **VERFAHREN ZUR KONTAKTLOSEN BESTIMMUNG VON STRÖMUNGSPARAMETERN**

METHOD FOR THE CONTACTLESS DETERMINING OF FLOW PARAMETERS

PROCÉDÉ DE DÉTERMINATION SANS CONTACT DE PARAMÈTRES D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2017 AT 1612017**

(43) Veröffentlichungstag der Anmeldung:
**26.02.2020 Patentblatt 2020/09**

(73) Patentinhaber: **Technische Universität Wien 1040 Wien (AT)**

(72) Erfinder:
• **HARASEK, Michael 1160 Wien (AT)**
• **LENDL, Bernhard 1160 Wien (AT)**
• **GASSER, Christoph 1180 Wien (AT)**
• **HADDADI, Bahram 1210 Wien (AT)**
• **JORDAN, Christian 2130 Mistelbach (AT)**

(74) Vertreter: **Sonn & Partner Patentanwälte Riemergasse 14 1010 Wien (AT)**

(56) Entgegenhaltungen:
**JP-A- S58 205 827    US-B1- 8 077 294**

• **GOSS L P ET AL: "COMBINED CARS/LDA INSTRUMENT FOR SIMULTANEOUS TEMPERATURE AND VELOCITY MEASUREMENTS", EXPERIMENTS IN FLUIDS, SPRINGER, HEIDELBERG, DE, Bd. 6, Nr. 3, 1. Januar 1988 (1988-01-01), Seiten 189-198, XP000002888, ISSN: 0723-4864, DOI: 10.1007/BF00230731**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur kontaktlosen Bestimmung mehrerer Parameter einer flüssigen Strömung.

STAND DER TECHNIK

Die Charakterisierung von Prozessströmen in Chemieanlagen hat große Bedeutung für die Industrie. Die Online-Erfassung von physikalischen und chemischen Eigenschaften von Strömungen wie Geschwindigkeit, Turbulenz, chemische Zusammensetzung und Konzentration spielt eine wesentliche Rolle bei der Einstellung und Optimierung von industriellen Prozessen und Anlagen. Zur Erfassung dieser Eigenschaften sind verschiedene, darunter auch kontaktlose Techniken verfügbar, wobei zur Bestimmung der Zusammensetzung und Konzentration von in einer Strömung enthaltenen chemischen Verbindungen neuerdings vor allem Raman-Spektroskopie zum Einsatz kommt.

Die US 8,077,294 B1 zeigt ein Satellitensystem, das mittels LIDAR die Radialwindgeschwindigkeit misst. Es können weitere Instrumente, wie ein Raman-Empfänger, vorgesehen sein.

Das Paper "Combined CARS/LDA instrument for simultaneous temperature and velocity measurements" von L. P. Goss et al, in Experiments in Fluids, Springer, Heidelberg, DE, Bd. 6, Nr. 3, 1. Januar 1988, Seiten 189-198, XP000002888, untersucht ein kombiniertes CARS/LDA-Instrument zum Messen der Temperatur und zweier Geschwindigkeitskomponenten in einer turbulenten Propan-Luft-Bunsenbrennerflamme.

Raman-Spektroskopie beruht auf der Raman-Streuung von monochromatischem Licht an Molekülen, wobei das eingesetzte monochromatische Licht üblicherweise von einem Laser stammt (R. S. Das, Y. K. Agrawal, "Raman spectroscopy: recent advancements, techniques and applications", Vibrational Spectroscopy 57.2 (2011): 163-176). Rinke et al. (Rinke, Günter, et al., "In situ Raman imaging combined with computational fluid dynamics for measuring concentration profiles during mixing processes", Chem. Eng. 179 (2012): 338-348) zeigen die Verwendung eines gepulsten Raman-Imaging-Verfahrens zur Bestimmung der Konzentration von zwei Komponenten (Wasser und Ethanol) beim Austritt aus einem Makro-Mischer. Die Autoren verglichen ihre Ergebnisse auch mit Daten aus Strömungssimulationen mittels numerischer Strömungsmechanik ("computational fluid dynamics", CFD), um die Eignung von Raman-Imaging zur Messung von Konzentrationsprofilen nachzuweisen. Die erreichbare Zeitauflösung hängt dabei von der Laser-Wiederholfrequenz und der Kamerageschwindigkeit ab. Bei Anwendung von CFD in Kombination mit RS werden aus einer Vielzahl von detektierten Raman-gestreuten Photonen Konzentrationsprofile erstellt.

Zur tatsächlichen Messung der Geschwindigkeit und der turbulenten Schwankungen sind beispielsweise die nachstehenden kontaktlosen Verfahren bekannt.

Laser Doppler Velocimetry, LDV, oder auch Laser-Doppler-Anemometrie, LDA, (die beiden Begriffe werden hierin austauschbar verwendet) ist die Geschwindigkeitsbestimmung von an Teilchen reflektiertem Laserlicht anhand der Doppler-Verschiebung, d.h. an einem Punkt (also mittels einer einzigen Messung) wozu in der Regel "seeding (oder: tracer) particles", also Teilchen gezielt zugesetzt werden, an denen ohne vorherige Kalibrierung die Doppler-Streuung erfolgen kann.

LDV erfasst dabei mit hoher Genauigkeit die mittlere Geschwindigkeit und die lokale Momentangeschwindigkeit (Schwankungen) einer Strömung über Bestimmung der Geschwindigkeit von Tracer-Partikeln, die zwei kollimierte, monochromatische und kohärente Laserstrahlen passieren (L. E. Drain, "The laser Doppler techniques", Chichester, Sussex, England and New York, Wiley-Interscience, 250 p. 1 (1980)). Dabei werden zwei kohärente Laserstrahlen in einem kleinen Volumen fokussiert, wobei sie ein spezielles "Fringe"-Lichtmuster bilden. Durchlaufen Tracer-Partikel in der Strömung diese Fringe-Zone, die aus helleren und dunkleren Lichtstreifen besteht, streuen sie dieses Licht. Das rückgestreute Licht wird in einer Empfängersonde gesammelt und mittels Photomultiplier detektiert. Da der Abstand zwischen hellen und dunklen Streifen bekannt ist, kann aus der Frequenz des Streulichtes die Partikelgeschwindigkeit berechnet werden. Aus den gesammelten Geschwindigkeitsdaten können über statistische Verfahren die mittlere Strömungsgeschwindigkeit und Turbulenzinformationen (Turbulenzintensität, turbulente kinetische Energie) der Strömung berechnet werden (D. F. G. Durao, M. V. Heitor und J. C. F. Pereira, "Measurements of turbulent and periodic flows around a square cross-section cylinder", Experiments in Fluids 6.5 (1988): 298-304).

Bei Molecular Tagging Velocimetry, MTV, werden Moleküle mit Licht angeregt und somit markiert ("tagged"), und das von ihnen abgegebene Fluoreszenz- oder Phosphoreszenzlicht wird detektiert, wobei aus zumindest zwei Messungen die Geschwindigkeit berechnet wird. Auch Kombinationen aus MTV und Raman-Spektroskopie sind bekannt, So kombinierten etwa Beushausen et al. (Beushausen, Volker, et al., "2D-measurement technique for simultaneous quantitative determination of mixing ratio and velocity field in microfluidic applications", Imaging Measurement Methods for Flow Analysis, Springer Berlin Heidelberg, 155-164 (2009)] kombinierten 2D Molecular Tagging Velocimetry ("2D MTV") mit PSRS, d.h. "planar spontaneous Raman scattering", um Geschwindigkeit und Konzentrationsfeld von Wasser und Ethanol in einem Mikromischer zu untersuchen. Zusätzlich verglichen sie ihre Ergebnisse mit jenen eines üblichen μPIV-Verfahrens.

Mittels Particle Image Velocimetry, PIV, werden anhand einer Vielzahl von Momentaufnahmen die Bewegungen von Teilchen optisch verfolgt, die in Vektorfelder und Geschwindigkeitswerte umgerechnet werden können. Eine Kombination aus PIV und Raman-Spektroskopie ist beispielsweise von Wellhausen et al. bekannt [M. Wellhausen, G. Rinke und H. Wackerbarth, "Combined measurement of concentration distribution and velocity field of two components in a micromixing process", Microfluidics and Nanofluidics 12.6 (2012): 917-926), die das Mischverhalten in einem Mikromischer untersuchten.

Die Nachteile dieser bekannten Kombinationen aus Geschwindigkeitsmessung mittels MTV oder PIV und Raman-Streuung sind unter anderem, dass einerseits eine Vielzahl von Messungen zur Bestimmung von Geschwindigkeit und Zusammensetzung bzw. Konzentration erforderlich sind, die darüber hinaus an unterschiedlichen Positionen der Strömung erfolgen und daher keine wirklich zuverlässigen Aussagen zulassen, speziell wenn die Geschwindigkeit der Strömung hoch und die Konzentration des oder der Analyten gering ist.

Aufgrund der relativ geringen Aufnahmefrequenz von Mehrfachbildern ist bei üblichen PIV-Systemen eine Erkennung hochfrequenter Schwankungsbewegungen nur unter erheblichem Aufwand möglich, beispielsweise unter Einsatz einer Aufnahmefrequenz, die gemäß dem Nyquist-Shannon-Abtasttheorem mindestens der zweifachen Frequenz der zu beobachtenden Maximalfrequenz entspricht. Somit sind entweder nur eingeschränkte Messungen von Turbulenz-Kenndaten innerhalb der Strömung oder Messungen mit erheblichem Bildspeicher- und Nachbearbeitungsaufwand möglich. Darüber hinaus benötigen PIV-Messungen einerseits zwei optische Zugänge zu der zu beobachtenden Strömung, nämlich einen für den Laser-Schnitt und normal dazu einen weiteren für die Kamera, und andererseits eine deutlich höhere Konzentration an Seeding-Partikeln als LDV.

Ziel der Erfindung war vor diesem Hintergrund die Bereitstellung eines verbesserten kontaktlosen Verfahrens zur Bestimmung von Geschwindigkeit und Konzentration von Strömungen.

OFFENBARUNG DER ERFINDUNG

Dieses Ziel erreicht die vorliegende Erfindung durch Bereitstellung eines Verfahrens zur kontaktlosen Bestimmung sowohl der Geschwindigkeit einer flüssigen Strömung als auch der Konzentration zumindest eines Analyten darin, wobei:

a) die Strömungsgeschwindigkeit in an sich bekannter Weise mittels Laser-Doppler-Anemometrie, LDA, unter Einsatz von Tracer-Partikeln gemessen wird, die ein Interferenzstreifenmuster im Kreuzungsbereich zweier kohärenter monochromatischer Lichtstrahlen passieren und dadurch ein Streulichtsignal erzeugen, dessen Frequenz proportional zu der senkrecht zu den Interferenzstreifen verlaufenden Geschwindigkeitskomponente der Strömung ist; und
b) die Konzentration des zumindest einen Analyten in an sich bekannter Weise mittels Raman-Spektroskopie gemessen wird, indem ein monochromatischer Lichtstrahl eingestrahlt und das Raman-Spektrum des an Analytenmolekülen in der Strömung unelastisch gestreuten Lichts aufgenommen wird, wobei die Lichtintensität von nur im Streulicht auftretenden Frequenzen proportional zur Konzentration der Analytenmoleküle in der Strömung ist; wobei
c) eine einzige Lichtquelle sowohl für die LDA als auch die Raman-Spektroskopie eingesetzt wird, so dass beide Messungen in dem Kreuzungsbereich der beiden aus der Lichtquelle stammenden kohärenten Lichtstrahlen vorgenommen werden, wobei mittels an den Tracer-Partikeln elastisch gestreuter Photonen die Geschwindigkeit gemessen wird und mittels an Analytenmolekülen unelastisch gestreuter Photonen die Konzentration gemessen wird; und
d) zur Geschwindigkeitsmessung die elastisch rückgestreuten Photonen mittels derselben Linsenoptik detektiert werden, die auch zur Einstrahlung der Lichtstrahlen eingesetzt wird.

Die vorliegende Erfindung kombiniert somit nicht einfach LDA und Raman-Spektroskopie zu einem einzigen Verfahren, in dem die mittels LDA gemessenen Geschwindigkeitswerte mit den anhand der Raman-Streuung ermittelten Konzentrationswerten in Relation gesetzt werden, sondern geht noch einen Schritt weiter, indem sowohl i) eine einzige Lichtquelle für die Geschwindigkeitsmessung mittels LDV und die Konzentrationsmessung mittels Raman-Spektroskopie eingesetzt wird als auch ii) mittels derselben Linsenoptik, die zur Einstrahlung der Lichtstrahlen eingesetzt wird, auch die Detektion der elastisch rückgestreuten Photonen zur Geschwindigkeitsmessung erfolgt. Auf diese Weise können innerhalb der Strömung sowohl deren Geschwindigkeit, sowie diverse Turbulenzkennzahlen, als auch die Konzentration eines oder mehrerer Analyten darin an einer einzigen Stelle bestimmt werden, wofür darüber hinaus schon eine einzige Messung ausreichen würde.

Die erfindungsgemäße Kombination zweier an sich bekannter Verfahren, die auf neuartige Weise zu einem einzigen Messverfahren kombiniert werden, bietet somit einen Synergieeffekt, da das Streulicht derselben Laserstrahlen für unterschiedliche Zwecke genutzt wird.

Der Umstand, dass bereits aus einer einzigen Messung die gewünschten Informationen bezüglich Strömungsgeschwindigkeit und Konzentration eines oder mehrerer bestimmter Analyten gewonnen werden können, ermöglicht die Durchführung einer Vielzahl von Messungen binnen kurzer Zeit, um die Messergebnisse mitteln und so die Messgenauigkeit erhöhen oder höherfrequente Schwankungen erkennen zu können.

Darüber hinaus reduziert die vorliegende Erfindung den apparativen Aufwand, da nur eine einzige Laserquelle und eine einzige Linsenoptik zur Einstrahlung und Detektion erforderlich sind, so dass keine gesonderte(n) Linse oder Lichtleiter zur Detektion der an den Tracer-Teilchen elastisch gestreuten Photonen vorgesehen zu werden braucht. Besonders bevorzugt werden gemäß vorliegender Erfindung jedoch auch die unelastisch gestreuten Photonen mittels derselben Linsenoptik gesammelt, um auch für die Raman-Spektroskopie keine gesonderte Optik einsetzen zu müssen. Dies ermöglicht eine äußerst kompakte Bauweise einer für die Durchführung der vorliegenden Erfindung geeigneten Messanordnung in einer einzigen, leicht transportablen Vorrichtung. Zudem ist auf diese Weise nur ein einziger optischer Zugang zur Strömung erforderlich.

Alternativ oder auch zusätzlich dazu können die unelastisch gestreuten Photonen jedoch auch mittels einer gesonderten, in einem 90°-Winkel zur Einstrahlrichtung positionierten Linsenoptik detektiert werden, wie dies bei Untersuchungen von Flüssigkeiten routinemäßig erfolgt, um elastisch gestreute Photonen, die den Detektor erreichen, zu minimieren. Durch die Verwendung zweier Linsenoptiken zur Detektion des Raman-Streulichts kann die Genauigkeit der Konzentrationsmessung erhöht werden.

In weiteren bevorzugten Ausführungsformen werden die aus der Lichtquelle in die Strömung eingestrahlten Lichtstrahlen während der Messung mittels einer Bragg-Zelle geringfügig frequenzverschoben, um im Kreuzungsbereich ein bewegtes Interferenzmuster zu erzeugen, anhand dessen die Strömungsrichtung bestimmt wird. Nicht bewegte Partikel liefern daher Streulicht mit der Shift-Frequenz, bei bewegten Partikeln wird die Frequenz je nach Strömungsrichtung addiert bzw. subtrahiert. Da die Shift-Frequenz bekannt ist, kann daraus die Partikelbewegungs- bzw. Strömungsrichtung genauer ermittelt werden.

Weiters wird gemäß vorliegender Erfindung bevorzugt, dass eine polychromatische Lichtquelle eingesetzt wird, deren Licht in mehr als ein Paar kohärenter Lichtstrahlen mit unterschiedlichen Wellenlängen geteilt wird, vorzugsweise in zwei oder drei Strahlenpaare, die auf denselben Punkt fokussiert werden, um das Interferenzmuster zu erzeugen. Dies hat den Vorteil, dass für einen einzigen Messpunkt gleichzeitig mehrere Geschwindigkeits- und Turbulenzkomponenten erfasst werden können, nämlich jeweils eine pro Strahlenpaar, um den Strömungszustand detaillierter zu beschreiben.

In weiteren bevorzugten Ausführungsformen des erfindungsgemäßen Verfahrens wird der Kreuzungsbereich der Lichtstrahlen zwischen einzelnen Messungen unter Verwendung einer Traversierung, z.B. mit einem motorbetriebenen Spiegel zur ein- oder zweidimensionalen Positionierung des Messpunkts, räumlich verschoben, wodurch Messungen an mehreren verschiedenen Messpunkten vorgenommen werden können. Dies ermöglicht die Erstellung eines Geschwindigkeitsprofils der untersuchten Strömung, was die Präzision des ermittelten Geschwindigkeitsparameters natürlich erheblich erhöht.

Speziell wenn eine gesonderte Detektion des Raman-Streulichts, z.B. in einem 90°-Winkel zur Einstrahlrichtung erfolgt, wird als Linsenoptik in bevorzugten Ausführungsformen der Erfindung das Objektiv einer CCD-Kamera eingesetzt, auf die noch bevorzugter die mittels eines Monochromators (z.B. eines Czerny-Turner-Monochromators) isolierten Wellenlängen gelenkt werden. Dabei ersetzt der CCD-Detektor der Kamera den ansonsten zur Umwandlung des Signals in elektrische Signale und Verstärkung derselben eingesetzten Photomultiplier.

An die CCD-Kamera ist besonders bevorzugt ein Spektrograph angeschlossen, der aus dem detektierten Streulichtsignal das zugehörige Spektrum erzeugt, das gegebenenfalls an eine iCCD-Kamera weitergeleitet wird. Wird (auch) diese Detektoranordnung mittels einer Traversiereinheit räumlich verschiebbar ausgeführt, können auch für die unelastisch gestreuten Photonen 2D- und 3D-Profile aufgenommen werden, aus denen sich 2D- und 3D-Konzentrationsverteilungen berechnen lassen.

Weiters werden gemäß vorliegender Erfindung die bei LDA und Raman-Spektroskopie detektierten Signale vorzugsweise zeitlich synchronisiert, was gewährleistet, dass die Geschwindigkeits- und die Konzentrationsinformationen aus dem gleichen Strömungsvolumen stammen, was ansonsten speziell bei Mehrphasenströmungen zu Fehlern führen kann.

KURZBESCHREIBUNG DER ZEICHNUNGEN

Die Erfindung wird nachstehend anhand spezifischer Beispiele für bevorzugte Ausführungsformen des erfindungsgemäßen Verfahrens und unter Bezugnahme auf die beiliegenden Zeichnungen näher erläutert, die Folgendes zeigen:

Fig. 1 zeigt den allgemeinen Grundaufbau für eine LDV-Strömungsmessung nach dem Rückstreu-Prinzip.
Fig. 2 skizziert allgemein den instrumentellen Aufbau der Raman-Spektroskopie.
Fig. 3 ist eine einfache Skizze des erfindungsgemäßen Verfahrens als Kombination aus Raman-Spektroskopie und LDV.

Fig. 4 zeigt schematisch den apparativen Aufbau zur Durchführung des erfindungsgemäßen Verfahrens.

Fig. 5 zeigt einen Entwurf des im Verfahren eingesetzten T- förmigen Strömungskanals.

Fig. 6 zeigt die Anordnung der Messpositionen im T- förmigen Strömungskanal.

Fig. 7 zeigt die Verteilung der gemessenen Geschwindigkeitswerte für einen Messpunkt.

Fig. 8 zeigt die zeitgemittelten Daten der Raman-Messung an verschiedenen Positionen.

Fig. 9 zeigt den Füllstand der verwendeten Flüssigkeitstanks und die Massenströme über die Versuchszeit.

Fig. 10 zeigt an verschiedenen Querschnitten gemessene und simulierte Geschwindigkeitsprofile.

Fig. 11 zeigt an verschiedenen Querschnitten gemessene und simulierte Konzentrationsprofile.

BEISPIELE

Nachstehend wird die Erfindung anhand einer bevorzugten Ausführungsform des Verfahrens näher erläutert. Wenngleich die vorliegende Erfindung hierin ausschließlich unter Bezugnahme auf Flüssigkeitsströmungen beschrieben wird, ist dem einschlägigen Fachmann klar, dass das Verfahren der vorliegenden Erfindung nach Vornahme nur geringfügiger Modifikationen prinzipiell auch auf Gasströmungen anwendbar ist.

*Laser-Doppler-Anemometrie, LDA*

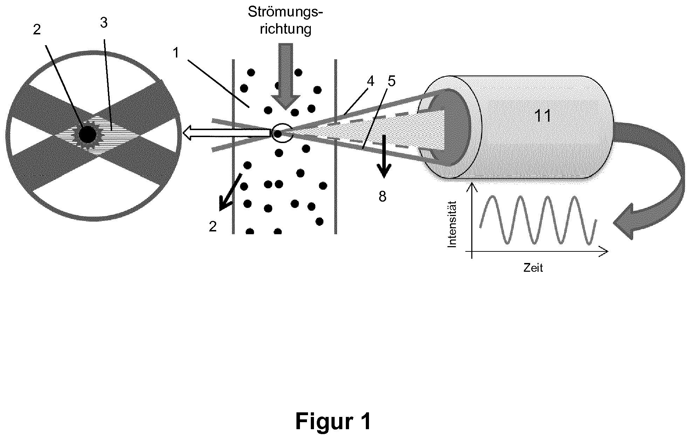

Wie bereits oben ausgeführt, besteht die vorliegende Erfindung darin, Laser-Doppler-Anemometrie, LDA, oder auch Laser-Doppler-Velozimetrie, LDV, und Raman-Spektroskopie auf neuartige Weise miteinander zu kombinieren. Fig. 1 zeigt allgemein den Grundaufbau für eine LDA-Strömungsmessung nach dem Rückstreu-Prinzip. Dabei werden aus einer Laserlichtquelle 11 zwei kohärente Laserstrahlen 4, 5 in einem kleinen Volumen fokussiert, wo sie sich kreuzen und im Kreuzungsbereich 3 ein spezielles Streifen-Lichtmuster bilden, wie dies in der schematischen Vergrößerung im linken Teil von Fig. 1 dargestellt ist. In der zu untersuchenden Strömung 1 mitgeführte Tracer-Partikel 2 passieren dieses aus helleren und dunkleren Lichtstreifen bestehende Muster, und an ihrer Oberfläche wird dieses Licht unter Einwirkung des Dopplereffekts gestreut. Dabei wird das rückgestreute ("back scattered") Licht 8 detektiert, um dieselbe Linsenoptik wie zur Aussendung der Laserstrahlen 4 und 5 auch zum Empfangen des Streulichts 8 nutzen zu können, was es erlaubt, mit nur einem optischen Zugang zur Strömung auszukommen. Aus der Frequenz des Streulichts 8 und dem bekannten Abstand zwischen hellen und dunklen Streifen kann die Partikelgeschwindigkeit berechnet werden.

Aufgrund der kleinen Größe und der niedrigen Konzentration der Tracer-Partikel kann man annehmen, dass sie der Strömung 1 folgen und keine Auswirkung auf das Strömungsbild haben (P. K. Rastogi, Hrsg., "Photomechanics", Bd. 77, Springer Science & Business Media (2003); Richard Goldstein, "Fluid mechanics measurements", CRC Press (1996)).

$$v = d \times f \qquad\qquad (1)$$

In Gleichung 1 stellt *v* die Partikel- (bzw. Strömungs-)geschwindigkeit dar, *d* und *f* sind der Abstand der Streifen im Interferenzmuster ("fringe spacing") bzw. die Frequenz des Streulichts 8.

*Raman-Spektroskopie*

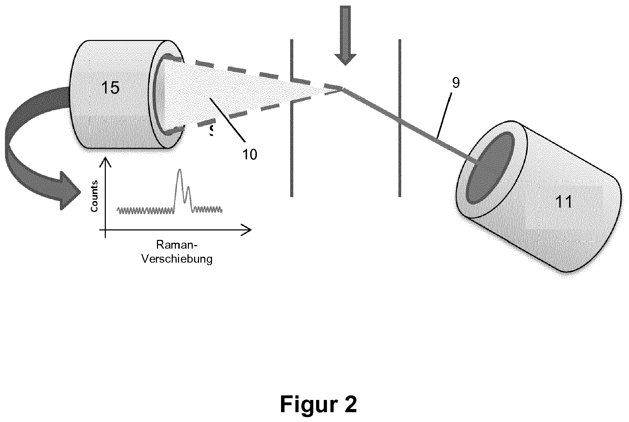

In Fig. 2 ist der instrumentelle Aufbau für die Raman-Spektroskopie schematisch dargestellt. Dabei wird üblicherweise ein Lichtstrahl 9 aus einem Laser 11 auf die Probe fokussiert, und das Streulicht 10 wird mittels eines Teleskops 15 aufgefangen und mittels eines Spektrographen analysiert. Dabei wechselwirken Photonen mit den Molekülen in der Probe, wobei sie entweder Energie an die Materie abgeben (Stokes-Verschiebung) oder Energie aufnehmen (Amti-Stokes-Verschiebung) und die Energieverschiebung der gestreuten Photonen 10 spezifisch und charakteristisch für ein bestimmtes Molekül ist. Die Ramanverschiebung wird dabei nach folgender Gleichung errechnet:

$$\Delta w = \left( \frac{1}{\lambda_0} - \frac{1}{\lambda_1} \right) \qquad\qquad (2)$$

wobei $\Delta w$ die Raman-Verschiebung ist, $\lambda_0$ und $\lambda_1$ die Wellenlänge der Laserphotonen 5 bzw. die Wellenlänge der gestreuten Photonen 10 darstellt.

*Computational Fluid Dynamics, CFD*

Die durch die nachstehend detailliert beschriebenen Ausführungsformen der Erfindung erzielten Ergebnisse wurden mit jenen von Computersimulationen mittels Computational Fluid Dynamics abgestimmt, wie die numerische Analyse in der Strömungsmechanik genannt wird (M. Ragheb, "Computational fluid dynamics" (1976)). Diese Methode erlaubt es, einen detaillierten Einblick in fluiddynamische Systeme zu gewinnen, die normalerweise gar nicht oder nur sehr schwer zugänglich sind. Analysen können auf verschiedenste Größenordnungen angewandt werden, wie z.B. Mikromischer oder ganze Industrieanlagen. Im Allgemeinen wird dabei die CFD durch Experimente verifiziert. Anschließend können anhand der validierten Modelle verschiedenste Änderungen an der Anlage am Computer simuliert werden und so optimierte Modifikationen gefunden werden (J. D. Anderson und J. Wendt, Computational fluid dynamics, Bd. 206, New York, McGraw-Hill (1995); H. K. Versteeg und M. Weeratunge, "An introduction to computational fluid dynamics: the finite volume method", Pearson Education (2007)).

CFD basiert auf der Lösung der Kontinuitäts- und der Navier-Stokes-Gleichung für die Berechnung von Druck und Strömungsgeschwindigkeit in einem Finite-Volumen-Ansatz.

$$\frac{\partial \rho}{\partial t} + \nabla \cdot (\rho u) = 0 \qquad (3)$$

$$\frac{\partial u}{\partial t} + (u.\nabla)u = \frac{-1}{\rho}\nabla p + \frac{\mu}{\rho}\nabla^2 u \qquad (4)$$

Die Energieerhaltung und -transport wird über die Energiegleichung modelliert.

$$\rho\left(\frac{\partial h}{\partial t} + \nabla \cdot (hu)\right) = \frac{-Dp}{Dt} + \nabla \cdot (K\nabla T) + (\acute{\tau}.\nabla)u \qquad (5)$$

## Verfahren der vorliegenden Erfindung

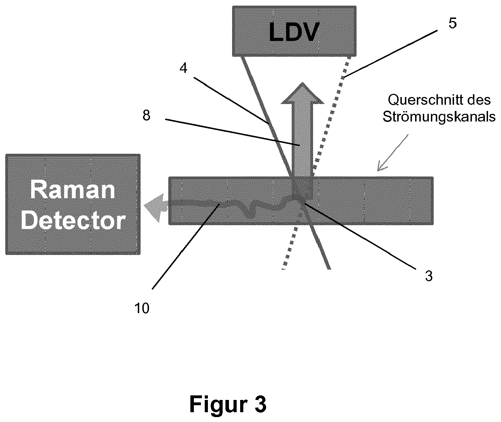

In Fig. 3 ist der allgemeine Ansatz der vorliegenden Erfindung schematisch skizziert. Ein in einem Kanal geführte Strömung wird gleichzeitig mittels LDV hinsichtlich ihrer Strömungsgeschwindigkeit und mittels Raman-Spektroskopie hinsichtlich ihrer Zusammensetzung analysiert, indem aus einer gemeinsamen Lichtquelle zwei Lichtstrahlen 4, 5 ausgesandt werden, die den für Raman-Spektroskopie ausgesandten Lichtstrahl 9 ersetzen, da ihre Wellenlänge ebenso auf die Natur des oder der Analyten abgestimmt ist, dessen/deren Konzentration in der Strömung zu bestimmen ist. Diese liegt üblicherweise im sichtbaren oder nahen Infrarot-Bereich. Im Kreuzungsbereich 3 der beiden Laserstrahlen wird einerseits das Interferenzmuster erzeugt, bei dessen Passage es zu elastischer Streuung der Photonen an Tracer-Partikeln kommt, gleichzeitig aber wechselwirken in der Strömung gelöste Analyten-Moleküle mit der Strahlung, wodurch Photonen unelastisch gestreut werden. Gemäß vorliegender Erfindung wird zur Geschwindigkeitsbestimmung mittels LDV das von den Tracer-Partikeln rückgestreute Licht 8 mittels derselben Linsenoptik detektiert, die auch zur Einstrahlung der Lichtstrahlen 4 und 5 genutzt wird und in Fig. 3 mit LDV gekennzeichnet ist. Das an den Analytenmolekülen unelastisch gestreute Licht 10 wird hingegen mittels eines Raman-Detektors, der vorzugsweise in einem Winkel von 90° zur Einstrahlrichtung angeordnet ist, detektiert. Alternativ oder auch zusätzlich zu diesem separaten Raman-detektor kann jedoch auch hierfür dieselbe Linsenoptik wie zur Einstrahlung genutzt werden, was im ersteren Fall eine äußerst kompakte Bauweise mit nur einem optischen Zugang zu der zu messenden Strömung ermöglicht und im zweiteren Fall die Genauigkeit der Konzentrationsmessung erhöht.

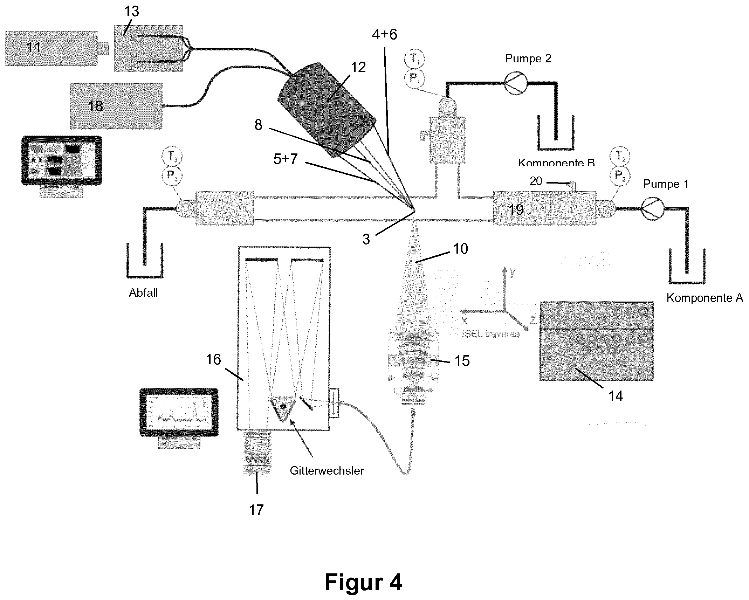

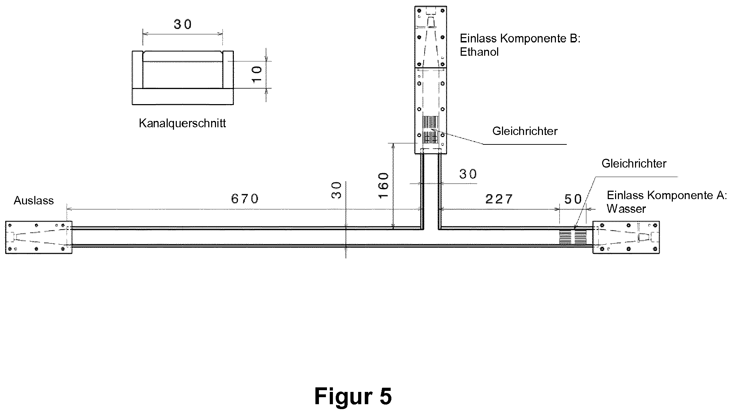

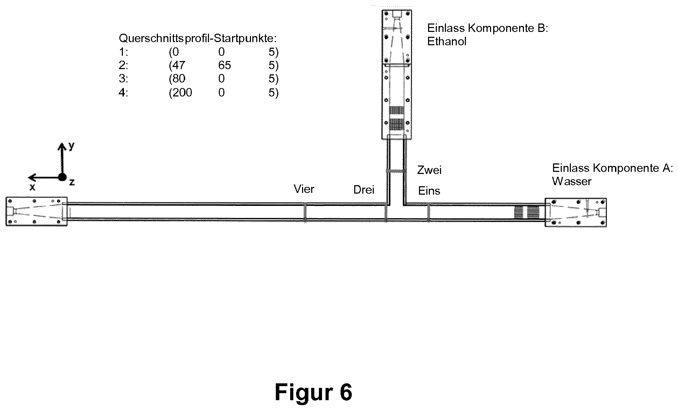

In Fig. 4 ist der Messaufbau zur Durchführung des erfindungsgemäßen Verfahrens anhand einer aus einem Gemisch aus Wasser und Ethanol bestehenden Strömung (vgl. Rinke et al., s.o.) schematisch dargestellt. Im Zentrum steht in T-förmiger Strömungskanal aus Glas und Aluminium, wie in den folgenden Figuren 5 und 6 vergrößert gezeigt, mit Einlässen für die Komponenten A (Wasser) und B (91%iger Alkohol) über die jeweiligen Pumpen 1 und 2, einem Einlass 20 für Tracer-Partikel, einem darauf folgenden Gleichrichter 19, einem in einen Auffangbehälter für flüssige Abfälle mündenden Auslass sowie jeweiligen Temperatur- und Drucksensoren ($T_i$, $P_i$).

Ein von einer Laserlichtquelle 11 ausgesandter Laserstrahl wird über eine Bragg-Zelle 13 frequenzgesteuert und in zwei Strahlenpaare unterschiedlicher Frequenz, d.h. insgesamt vier Strahlen 4, 5, 6, 7 geteilt, die über jeweilige Lichtleiter einer Fokussierungsoptik 12 zugeführt werden, die die vier Strahlen 4+6 und 5+7 an einem Punkt innerhalb des Strömungskanals fokussiert, so dass im Kreuzungsbereich 3 der Strahlen ein Interferenzmuster erzeugt wird. Die Verwendung von vier anstelle von nur zwei Strahlen hat den Vorteil, dass zwei Geschwindigkeitskomponenten gleichzeitig erfasst werden können und durch Koinzidenzverfahren bei der Auswertung die Signalqualität erhöht werden kann.

Die im Kreuzungsbereich elastisch gestreuten Photonen werden als Streulicht 8 von derselben Optik 12 gesammelt und zur Signalverstärkung und -verarbeitung einem kombinierten Photomultiplier und Signalprozessor 18 zugeführt. Die unelastisch gestreuten Photonen werden hingegen in der hier dargestellten Ausführungsform als Streulicht 10 von einer in einem 90°-Winkel zur Einstrahlrichtung positionierten CCD-Kamera 15 gesammelt, die die optischen in elektrische Signale umwandelt, die in der Folge einem Spektographen 16 zugeführt, der die Signale unterschiedlicher Intensität in ihr Spektrum zerlegt, das schließlich von einer iCCD-Kamera 17 verstärkt und gespeichert wird. Mittels einer Traversiereinheit 14 konnte der gesamte Aufbau räumlich verschoben werden, um Messungen an mehreren verschiedenen Messpunkten vorzunehmen, was die Aufnahme von Geschwindigkeitsprofilen der Strömung bzw. 2D- und 3D-Raman-Spektren und -Konzentrationsprofile des Analyten ermöglichte.

Der gesamte Aufbau bestand konkret aus den folgenden Komponenten:

PDPA System von TSI Inc., 2-Komponenten-Phasen-Doppler-Partikel-Analysator-Laser;
CVI Melles-Griot, luftgekühlter Argon-Ionen-Laser (nominell 300 mW);
Strahlenteiler: TSI Inc., fasergekoppelter Wellenlängen-Separator mit Bragg-Zelle (488 nm blau, 514,5 nm grün);
Laser-Sender/Receiver-Sonde: TSI Inc., TR260 (350 mm Fokuslänge, 61 mm Durchmesser), fasergekoppelte Sonde für 180°-Detektierung; beprobte Länge am Fokuspunkt 0,91 mm, Fringe-Spacing 3,6 $\mu$m;
Detektor: TSI Inc. PDM 1000 Photomultiplier System;
Signalprozessor: TSI FSA 4000 3-Kanal-Digital-Burst-Prozessor (800 MHz Sampling-Frequenz, 175 MHz max. Doppler-Frequenz);
Software: FlowSizer (TSI Inc.)
Sigma 33-88 mm Kamera-Objektiv mit einem 150 $\mu$m großen Pinhole (Sigma);
"round to slit" Faserbündel zur Kopplung des Lichts in den Spektrographen (Avantes); Spectrograph (PI Acton 2750);
iCCD Kamera (PI-MAX, 1024×268 Pixel);
ISEL XYZ-Traversiereinheit.

*Material und Durchführung*

Um geeignetes Material für die LDV/Raman-Messungen zu ermitteln, wurden verschiedene Flüssigkeiten getestet. Wasser (Leitungswasser) und Ethanol (91,12% Ethanol + 8.88% Wasser) wurden schließlich aus folgenden Gründen ausgewählt:

- ungiftig
- einfache Verfügbarkeit
- passendes Raman-Spektrum (beide Flüssigkeiten können eindeutig identifiziert werden, ausreichende Intensität)
- ähnliche physikalische Eigenschaften.

In Fig. 5 ist eine vergrößerte Ansicht des T-förmigen Strömungskanals dargestellt. Wasser wurde durch den geraden Einlass "Einlass Komponente A", Ethanol durch den seitlichen Einlass "Einlass Komponente B" in den Kanal gepumpt. Um die Massenströme der beiden Flüssigkeiten zu ermitteln, wurde ein gravimetrisches Verfahren angewendet, wobei das Gewicht der Flüssigkeitstanks mittels Waage gemessen und aufgezeichnet wurde. An beiden Einlässen wurden Gleichrichter eingebaut, um Einlasseffekte auf die Strömung zu reduzieren und eine homogene Strömung im Kanal zu gewährleisten. Der Querschnitt des Kanals betrug 10 x 30 mm.

Die LDV-Messzeit pro Messpunkt wurde auf 10 s oder 10.000 gültige Partikelsignale (Counts) eingestellt, während die Zusammensetzung mittels Raman jede Sekunde gemessen wurde. Sphärische Aluminiumpartikel (Durchmesser < 0,045 mm, Stokes-Zahl < 1) wurden als Tracer-Partikel für die LDV-Messung verwendet, wobei die Konzentration in beiden Strömen ~100 ppm betrug. Die Aufgabe und Dispersion der Partikel erfolgte durch Zugabe in die Flüssigkeitstanks.

LDV-Messdaten wurden mit folgenden Signalprozessor-Einstellungen erhalten:

- Burst threshold: 50 mV
- Bandpassfilter: 1-10 MHz
- Downmix frequency: 35 MHz

Die Messung der zwei Geschwindigkeitskomponenten erfolgte an vier Positionen des Kanals, wie in Fig. 6 gezeigt wird. Da nur Reinkomponenten an den Einlässen vorliegen, wurde bei Profil 1 und 2 nur eine LDA-Messung an 11 Punkten durchgeführt. In der Mischzone bei Profil 3 und 4 hingegen wurden LDA- und Raman-Messungen an 16 Punkten durchgeführt. Alle Messungen wurden in der Mitte des Kanals in Z-Richtung bei 298 K und Umgebungsdruck

($10^5$ Pa) durchgeführt.

Um die Messergebnisse zu verifizieren, wurde eine CFD-Simulation des Experiments mit dem Open-source-Programm OpenFOAM® [www.openfoam.com] durchgeführt. Basierend auf der OpenFOAM®-Plattform wurde ein neuer Solver (viscoFoam) für die Simulation von mischenden Strömen entwickelt. Die Randbedingungen für die Simulationen wurden entsprechend der experimentellen Bedingungen gewählt (Eintrittstemperatur, Umgebungsdruck, Massenstrom). Da die Reynoldszahl im Kanal im Bereich der kritischen Reynoldszahl lag (Wassereinlass: ~3700, EtOH-Einlass 2: ~1700, nach Vermischung: ~5000) wurde das Übergangsturbulenzmodell von Menter et al. verwendet (F. R. Menter et al., "A correlation-based transition model using local variables Part I: model formulation", Journal of Turbomachinery 128.3 (2006): 413-422; R. B. Langtry et al., "A correlation-based transition model using local variables Part II: test cases and industrial applications", Journal of Turbomachinery 128.3 (2006): 423-434; R. B. Langtry und F. R. Menter, "Correlation-based transition modeling for unstructured parallelized computational fluid dynamics codes", AIAA journal 47.12 (2009): 2894-2906; R. B. Langtry und F. R. Menter, "Transition modeling for general CFD applications in aeronautics", 43rd AIAA Aerospace Sciences Meeting and Exhibit. 2005).

*Datenauswertung*

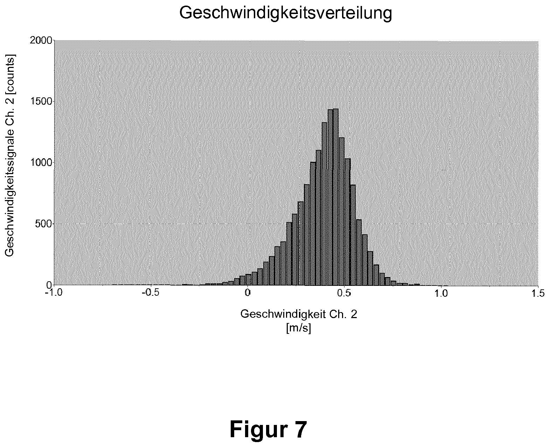

Fig. 7 zeigt einen Auszug der Daten, die mittels LDA-Messung gewonnen wurden (zehnter Messpunkt von Profil 3, Geschwindigkeitskomponente in x-Richtung). Daraus wurden für jeden Messpunkt die mittlere Geschwindigkeit sowie die turbulente kinetische Energie berechnet und dargestellt.

Turbulente kinetische Energie ist definiert als die mittlere kinetische Energie der turbulenten Fluktuationen (lokale Geschwindigkeitsschwankungen, Wirbel) bezogen auf die Masse des Fluids (D. C. Wilcox, "Turbulence modeling for CFD", Bd. 2, La Canada, CA: DCW industries (1998); P. T. Harsha und S. C. Lee, "Use of turbulent kinetic energy in free mixing studies", AIAA Journal 8.6 (1970): 1026-1032). Für eine zweidimensionale Strömung kann die turbulente kinetische Energie wie folgt berechnet werden (P. Saarenrinne und M. Piirto, "Turbulent kinetic energy dissipation rate estimation from PIV velocity vector fields", Experiments in Fluids 29 (2000): S300-S307):

$$k = \frac{1}{2}\left((u')^2 + (v')^2\right) \qquad (6)$$

worin k die turbulente kinetische Energie, u' die Geschwindigkeitsfluktuationen in der ersten Richtung und v' die Geschwindigkeitsfluktuationen in der zweiten Richtung bezeichnet.

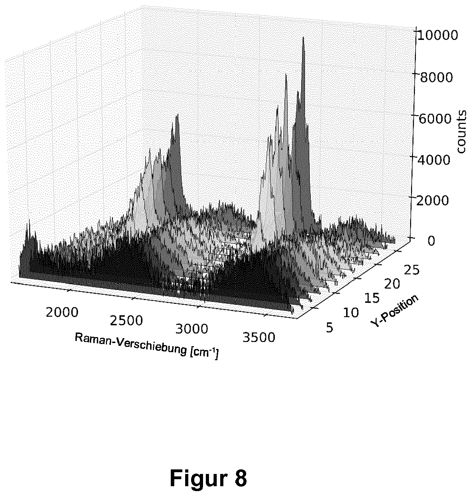

Fig. 8 zeigt zeitgemittelte Daten der Raman-Spektroskopie von Profil 3 (siehe in Fig. 6). Mithilfe einer Kalibrationskurve konnten die Daten ausgewertet und die Konzentrationen von Wasser und Ethanol für jeden Punkt berechnet und dargestellt werden. Pro Messpunkt wurden 10 Raman-Messungen durchgeführt, wobei jede Messung 1 s benötigte.

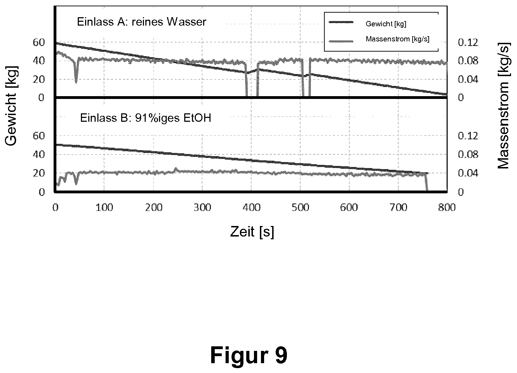

Die Masse der Flüssigkeitstanks wurde während des Experiments aufgezeichnet und daraus die Massenströme ermittelt. Wie in Fig. 9 erkenntlich, liegt der durchschnittliche Massenstrom für Wasser (Komponente A) bei -0,08 kg/s und für Ethanol (Komponente B) bei -0,04 kg/s. Die Sprungstellen am Wassereinlass lassen sich durch das zweimalige Nachfüllen des Wassertanks während des Experiments erklären.

*Ergebnisse und Diskussion*

*LDA-Messungen*

Die Ergebnisse der LDA-Messungen aller Profile wurden ausgewertet und dargestellt. Der Vergleich mit der CFD-Simulation zeigt, dass die Ergebnisse gut mit der Vorhersage übereinstimmen.

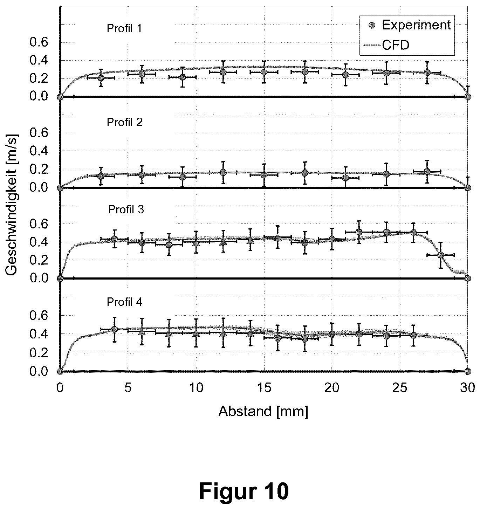

Fig. 10 zeigt gemessene und simulierte Geschwindigkeitsprofile an verschiedenen Querschnitten. Vertikale Balken zeigen die Schwankungsbreite der Geschwindigkeit aufgrund der Turbulenz, d.h. die durchschnittliche Geschwindigkeitsfluktuation basierend auf der turbulenten kinetischen Energie an und horizontale Balken den Fehler, der durch die Toleranz der Positionierung des Laserfokuspunkts im Strömungskanal entsteht. In Profil 3 und 4 wurden einige ungültige Messpunkte (Dreiecke) durch Messpunkte eines anderen Experiments unter denselben Bedingungen ersetzt. Die durchgehende Linie entspricht den Ergebnissen der CFD.

Betrachtet man die Geschwindigkeitsprofile 1 und 2, ergibt sich ein durchschnittlicher Massenstrom von 0,07 kg/s für den Wassereinlass und 0,04 kg/s für den Alkoholeinlass, was gut mit den aus der Bilanz erhaltenen Werten übereinstimmt. Fig. 10 zeigt die Messergebnisse im Vergleich mit den Ergebnissen der CFD-Simulation. Innerhalb der zu erwarteten Messungenauigkeit stimmen diese überein, was beispielsweise am Geschwindigkeitsmaximum nahe der Wand in Profil 3 zu sehen ist.

*Raman-Messungen*

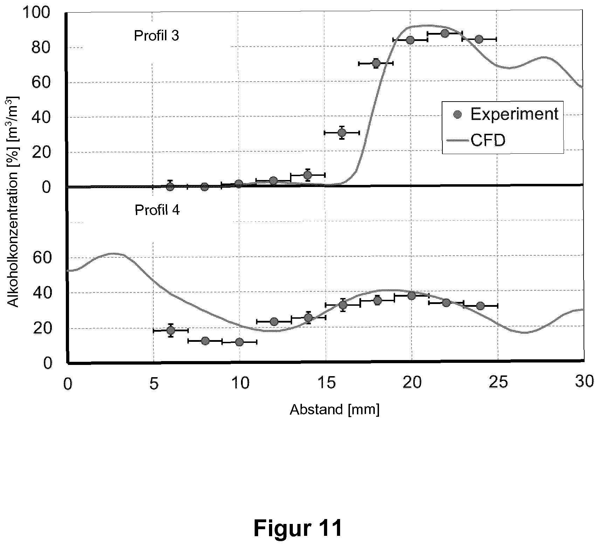

Die Konzentrationsdaten der Raman-Messung wurden nur an den Profilen 3 und 4 aufgezeichnet, da nur diese Profile in der Mischzone lagen und deswegen ein Konzentrationsgradient zu erwarten war. Die Punkte in Fig. 11 zeigen die experimentellen Daten (zeitgemittelte Konzentrationsinformation), wobei die horizontalen Balken den Fehler durch die Toleranz der Positionierung des Laserfokuspunkts und die vertikalen Balken die Konzentrationsfluktuation über der Zeit angeben.

Wie in Fig. 11 zu sehen ist, stimmen die experimentellen Daten recht gut mit den Simulationsergebnissen überein. Profil 3 gibt die Position der Ethanol-Konzentrationsänderung sowie die Maximalkonzentration gut wieder. Auch Profil 4 zeigt eine akzeptable Übereinstimmung der Maxima und Minima sowie beim allgemeinen Konzentrationsverlauf.

*Zusammenfassung*

Es wird ein neues Verfahren zur gleichzeitigen Messung von Geschwindigkeit und Konzentrationsdaten vorgestellt, das auf der Kombination von zwei etablierten Verfahren, Laser-Doppler-Anemometrie und stand-off Raman-Spektroskopie basiert. Dabei wird die Laser-Quelle der LDA-Messung mehrfach genützt: Das Rückstreulicht der Tracer-Partikel in der Fluidströmung wird zur Bestimmung der Geschwindigkeit und der turbulenten Geschwindigkeitsschwankungen ausgewertet. Zusätzlich werden zeitgleich im Fokuspunkt der LDA-Messung Ramanspektren gesammelt. Räumliche und zeitliche Synchronisierung erfolgen über ein Traversierungssystem, das den optischen Aufbau zur Aufnahme von Profilen in der durchströmten Geometrie bewegt. Weiters wurden neben den Messungen auch CFD-Simulationen des Strömungskanals durchgeführt, um die experimentellen Ergebnisse zur Validierung des Messaufbaus vergleichen zu können. Es konnte eine gute Übereinstimmung zwischen Simulation und Experiment gefunden werden, was die technische Anwendbarkeit bestätigt.

Die erfindungsgemäße Kombination aus LDA- bzw. LDV- und Raman-Messungen unter Verwendung einer einzigen Lichtquelle ermöglicht somit simultane Geschwindigkeits- und Konzentrationsmessungen an derselben Stelle innerhalb der zu untersuchenden Strömung mittels einer einzigen Lichtquelle - und in bevorzugten Ausführungsformen auch mittels einer einzigen Linsenoptik sowohl zur Einstrahlung als auch zur Detektion -, was synergistische Effekte dieser erfindungsgemäßen Kombination begründet.

**Patentansprüche**

1.  Verfahren zur kontaktlosen Bestimmung sowohl der Geschwindigkeit einer flüssigen Strömung (1) als auch der Konzentration zumindest eines Analyten darin, wobei:

     a) die Strömungsgeschwindigkeit in an sich bekannter Weise mittels Laser-Doppler-Anemometrie, LDA, unter Einsatz von Tracer-Partikeln (2) gemessen wird, die ein Interferenzstreifenmuster im Kreuzungsbereich (3) zweier kohärenter monochromatischer Lichtstrahlen (4, 5) passieren und dadurch ein Streulichtsignal (8) erzeugen, dessen Frequenz proportional zu der senkrecht zu den Interferenzstreifen verlaufenden Geschwindigkeitskomponente der Strömung (1) ist; und
     b) die Konzentration des zumindest einen Analyten in an sich bekannter Weise mittels Raman-Spektroskopie gemessen wird, indem ein monochromatischer Lichtstrahl (9) eingestrahlt und das Raman-Spektrum des an Analytenmolekülen in der Strömung (1) unelastisch gestreuten Lichts (10) aufgenommen wird, wobei die Lichtintensität von nur im Streulicht (10) auftretenden Frequenzen proportional zur Konzentration der Analytenmoleküle in der Strömung (1) ist; wobei
     c) eine einzige Lichtquelle (11) sowohl für die LDA als auch die Raman-Spektroskopie eingesetzt wird, so dass beide Messungen in dem Kreuzungsbereich (3) der beiden aus der Lichtquelle (11) stammenden kohärenten Lichtstrahlen (4, 5) vorgenommen werden, wobei mittels an den Tracer-Partikeln (2) elastisch gestreuter Photonen (8) die Geschwindigkeit gemessen wird und mittels an Analytenmolekülen unelastisch gestreuter Photonen (10) die Konzentration gemessen wird; und
     d) zur Geschwindigkeitsmessung die elastisch rückgestreuten Photonen (8) mittels derselben Linsenoptik (12) detektiert werden, die auch zur Einstrahlung der Lichtstrahlen eingesetzt wird.

2.  Verfahren nach Anspruch 1, **dadurch gekennzeichnet, dass** auch die zur Konzentrationsmessung dienenden, unelastisch gestreuten Photonen (10) mittels derselben Linsenoptik (12) detektiert werden, die auch zur Einstrahlung der Lichtstrahlen eingesetzt wird.

3.  Verfahren nach Anspruch 1 oder 2, **dadurch gekennzeichnet, dass** die zur Konzentrationsmessung dienenden, unelastisch gestreuten Photonen (10) mittels einer in einem 90°-Winkel zur Einstrahlrichtung positionierten Linsenoptik (15) detektiert werden.

4. Verfahren nach einem der Ansprüche 1 bis 3, **dadurch gekennzeichnet, dass** die aus der Lichtquelle (11) in die Strömung (1) eingestrahlten Lichtstrahlen (4, 5) während der Messung mittels einer Bragg-Zelle (13) frequenzverschoben werden, um im Kreuzungsbereich (3) ein bewegtes Interferenzmuster zu erzeugen, anhand dessen die Strömungsrichtung bestimmt wird.

5. Verfahren nach einem der Ansprüche 1 bis 4, **dadurch gekennzeichnet, dass** eine polychromatische Lichtquelle (11) eingesetzt wird, deren Licht in mehr als ein Paar kohärenter Lichtstrahlen (4, 5, 6, 7) mit unterschiedlichen Wellenlängen geteilt wird, die auf denselben Punkt fokussiert werden, um das Interferenzmuster zu erzeugen.

6. Verfahren nach einem der Ansprüche 1 bis 5, **dadurch gekennzeichnet, dass** der Kreuzungsbereich (3) der Lichtstrahlen (4, 5, 6, 7) unter Verwendung einer Traversierung (14) räumlich verschoben wird und Messungen an mehreren verschiedenen Messpunkten vorgenommen werden.

7. Verfahren nach einem der Ansprüche 3 bis 6, **dadurch gekennzeichnet, dass** als zur Konzentrationsmessung dienende Linsenoptik (15) das Objektiv einer CCD-Kamera eingesetzt wird.

8. Verfahren nach Anspruch 7, **dadurch gekennzeichnet, dass** an die CCD-Kamera ein Spektrograph (16) angeschlossen ist, der aus dem detektierten Streulichtsignal (10) das zugehörige Spektrum erzeugt, das gegebenenfalls an eine iCCD-Kamera (17) weitergeleitet wird.

9. Verfahren nach einem der Ansprüche 1 bis 8, **dadurch gekennzeichnet, dass** die bei LDA und Raman-Spektroskopie detektierten Signale (8, 10) zeitlich synchronisiert werden.

**Claims**

1. A method for the contactless determination of both the speed of a liquid flow (1) and the concentration of at least one analyte therein, wherein:

   a) the flow speed is conventionally measured by means of laser Doppler anemometry, LDA, using tracer particles (2), which pass an interference strip pattern in the intersecting region (3) of two coherent monochromatic light beams (4, 5) and thereby generate a scattered light signal (8), the frequency of which is proportional to the speed component of the flow (1) extending perpendicular to the interference strips; and
   b) the concentration of the at least one analyte is conventionally measured by means of Raman spectroscopy in that a monochromatic light beam (9) is irradiated and the Raman spectrum of the light (10) inelastically scattered on analyte molecules in the flow (1) is recorded, wherein the light intensity of frequencies, which only occur in the scattered light (10), is proportional to the concentration of the analyte molecules in the flow (1); wherein
   c) a single light source (11) is used for both the LDA and the Raman spectroscopy such that both measurements are carried out in the intersecting region (3) of the two coherent light beams (4, 5) originating from the light source (11), and wherein the speed is measured by means of photons (8) that are elastically scattered on the tracer particles (2) and the concentration is measured by means of photons (10) that are inelastically scattered on analyte molecules; and
   d) the elastically back-scattered photons (8) are detected by means of the same optical lens system (12), which is also used for the irradiation of the light beams, for the purpose of the speed measurement.

2. The method according to claim 1, **characterized in that** also the inelastically scattered photons (10) for the concentration measurement are detected by means of the same optical lens system (12), which is also used for the irradiation of the light beams.

3. The method according to claim 1 or 2, **characterized in that** the inelastically scattered photons (10) for the concentration measurement are detected by means of an optical lens system (15), which is positioned at a 90° angle to the irradiating direction.

4. The method according to one of claims 1 to 3, **characterized in that** the light beams (4, 5) emitted from the light source (11) into the flow (1) are frequency-shifted during the measurement by means of a Bragg cell (13) in order to generate a moving interference pattern in the intersecting region (3), based on which interference pattern the flow direction is determined.

5. The method according to one of claims 1 to 4, **characterized in that** a polychromatic light source (11) is used, the light of which is split into more than one pair of coherent light beams (4, 5, 6, 7) with different wavelengths that are focused on the same point in order to generate the interference pattern.

6. The method according to one of claims 1 to 5, **characterized in that** the intersecting region (3) of the light beams (4, 5, 6, 7) is spatially shifted by using a traversing unit (14), and **in that** measurements are carried out at several different measuring points.

7. The method according to one of claims 3 to 6, **characterized in that** the lens of a CCD camera is used as the optical lens system (15) for the concentration measurement.

8. The method according to claim 7, **characterized in that** the CCD camera is connected to a spectrograph (16), which generates the corresponding spectrum from the detected scattered light signal (10), wherein said spectrum is optionally forwarded to an iCCD camera (17) .

9. The method according to one of claims 1 to 8, **characterized in that** the signals (8, 10) detected during LDA and Raman spectroscopy are synchronized in time.


## Revendications

1. Procédé de détermination sans contact aussi bien de la vitesse d'un écoulement liquide (1) que de la concentration d'au moins un analyte qui y est contenu, dans lequel :

   a) la vitesse d'écoulement est mesurée d'une façon connue en elle-même au moyen de l'anémométrie laser-doppler, LDA, avec utilisation de particules de traceur (2) qui passent par un motif de franges d'interférence dans la zone de croisement (3) de deux rayons lumineux (4, 5) monochromatiques cohérents et produisent ce faisant un signal de lumière diffusée (8) dont la fréquence est proportionnelle à la composante de vitesse de l'écoulement (1) qui est perpendiculaire aux franges d'interférence ; et
   b) la concentration de l'analyte au moins au nombre de un est mesurée d'une façon connue en elle-même au moyen de la spectroscopie Raman par le fait qu'un rayon lumineux (9) monochromatique est émis et le spectre de Raman de la lumière (10) diffusée de façon non élastique sur des molécules d'analyte dans l'écoulement (1) est enregistré, l'intensité lumineuse de fréquences qui apparaissent seulement dans la lumière (10) diffusée étant proportionnelle à la concentration des molécules d'analyte dans l'écoulement (1) ;
   c) une source de lumière (11) unique est utilisée aussi bien pour la LDA que pour la spectroscopie Raman de telle sorte que les deux mesures sont effectuées dans la zone de croisement (3) des deux rayons lumineux (4, 5) cohérents en provenance de la source de lumière (11), la vitesse étant mesurée au moyen de photons (8) diffusés élastiquement sur les particules de traceur (2), et la concentration étant mesurée au moyen de photons (10) diffusés de façon non élastique sur des molécules d'analyte, et
   d) pour la mesure de vitesse, les photons (8) rétrodiffusés élastiquement sont détectés au moyen de la même optique à lentille (12) que celle utilisée également pour l'émission des rayons lumineux.

2. Procédé selon la revendication 1, **caractérisé en ce que** les photons (10) diffusés de façon non élastique et servant à la mesure de la concentration sont eux aussi détectés au moyen de la même optique à lentille (12) que celle utilisée également pour l'émission des rayons lumineux.

3. Procédé selon la revendication 1 ou 2, **caractérisé en ce que** les photons (10) diffusés de façon non élastique et servant à la mesure de la concentration sont détectés au moyen d'une optique à lentille (15) positionnée en formant un angle de 90° avec la direction d'émission.

4. Procédé selon l'une des revendications 1 à 3, **caractérisé en ce que** les rayons lumineux (4, 5) émis à partir de la source de lumière (11) vers l'écoulement (1) sont décalés en fréquence pendant la mesure au moyen d'une cellule de Bragg (13) pour produire dans la zone de croisement (3) un motif d'interférence animé à l'aide duquel la direction d'écoulement est déterminée.

**5.** Procédé selon l'une des revendications 1 à 4, **caractérisé en ce qu'**il est utilisé une source de lumière (11) polychromatique dont la lumière est divisée en plus d'une paire de rayons lumineux (4, 5, 6, 7) cohérents ayant des longueurs d'onde différentes qui sont focalisés sur le même point pour produire le motif d'interférence.

**6.** Procédé selon l'une des revendications 1 à 5, **caractérisé en ce que** la zone de croisement (3) des rayons lumineux (4, 5, 6, 7) est décalée dans l'espace avec utilisation d'une traversée (14), et des mesures sont effectuées au niveau de plusieurs points de mesure différents.

**7.** Procédé selon l'une des revendications 3 à 6, **caractérisé en ce que** l'objectif d'une caméra CCD est utilisé en tant qu'optique à lentille (15) servant à la mesure de concentration.

**8.** Procédé selon la revendication 7, **caractérisé en ce qu'**un spectrographe (16) est connecté à la caméra CCD et produit, à partir du signal de lumière diffusée (10) détecté, le spectre correspondant qui est éventuellement transmis à une caméra iCCD (17).

**9.** Procédé selon l'une des revendications 1 à 8, **caractérisé en ce que** les signaux (8, 10) détectés lors de la LDA et de la spectroscopie Raman sont synchronisés temporellement.

Figur 1

**Figur 2**

Querschnitt des
Strömungskanals

LDV

Raman
Detector

**Figur 3**

Figur 4

30

Einlass Komponente B:
Ethanol

Kanalquerschnitt

10

Gleichrichter

Gleichrichter

Auslass

670

30

160

30

227

50

Einlass Komponente A:
Wasser

17

**Figur 5**

Einlass Komponente A:
Wasser

Einlass Komponente B:
Ethanol

Zwei

Eins

Drei

Vier

Querschnittsprofil-Startpunkte:
1: (0 0 5)
2: (47 65 5)
3: (80 0 5)
4: (200 0 5)

**Figur 6**

Figur 7

**Figur 8**

**Figur 9**

**Figur 10**

**Figur 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8077294 B1

**In der Beschreibung aufgeführte Nicht-Patentliteratur**

- Combined CARS/LDA instrument for simultaneous temperature and velocity measurements. **VON L. P. GOSS et al.** Experiments in Fluids. Springer, 01. Januar 1988, vol. 6, 189-198
- **R. S. DAS ; Y. K. AGRAWAL.** Raman spectroscopy: recent advancements, techniques and applications. *Vibrational Spectroscopy,* 2011, vol. 57.2, 163-176
- **RINKE ; GÜNTER et al.** In situ Raman imaging combined with computational fluid dynamics for measuring concentration profiles during mixing processes. *Chem. Eng.,* 2012, vol. 179, 338-348
- **L. E. DRAIN.** The laser Doppler techniques. Wiley-Interscience, 1980, vol. 250, 1
- **D. F. G. DURAO ; M. V. HEITOR ; J. C. F. PEREIRA.** Measurements of turbulent and periodic flows around a square cross-section cylinder. *Experiments in Fluids,* 1988, vol. 6.5, 298-304
- 2D-measurement technique for simultaneous quantitative determination of mixing ratio and velocity field in microfluidic applications. **BEUSHAUSEN ; VOLKER et al.** Imaging Measurement Methods for Flow Analysis. Springer, 2009, 155-164
- **M. WELLHAUSEN ; G. RINKE ; H. WACKERBARTH.** Combined measurement of concentration distribution and velocity field of two components in a micromixing process. *Microfluidics and Nanofluidics,* 2012, vol. 12.6, 917-926
- Photomechanics. Springer Science, 2003, vol. 77
- **RICHARD GOLDSTEIN.** Fluid mechanics measurements. CRC Press, 1996
- **M. RAGHEB.** *Computational fluid dynamics,* 1976
- **J. D. ANDERSON ; J. WENDT.** Computational fluid dynamics. McGraw-Hill, 1995, vol. 206
- **H. K. VERSTEEG ; M. WEERATUNGE.** An introduction to computational fluid dynamics: the finite volume method. *Pearson Education,* 2007
- **F. R. MENTER et al.** A correlation-based transition model using local variables Part I: model formulation. *Journal of Turbomachinery,* 2006, vol. 128.3, 413-422
- **R. B. LANGTRY et al.** A correlation-based transition model using local variables Part II: test cases and industrial applications. *Journal of Turbomachinery,* 2006, vol. 128.3, 423-434
- **R. B. LANGTRY ; F. R. MENTER.** Correlation-based transition modeling for unstructured parallelized computational fluid dynamics codes. *AIAA journal,* 2009, vol. 47.12, 2894-2906
- **R. B. LANGTRY ; F. R. MENTER.** Transition modeling for general CFD applications in aeronautics. *43rd AIAA Aerospace Sciences Meeting and Exhibit,* 2005
- **D. C. WILCOX.** *Turbulence modeling for CFD,* 1998, vol. 2
- **P. T. HARSHA ; S. C. LEE.** Use of turbulent kinetic energy in free mixing studies. *AIAA Journal,* 1970, vol. 8.6, 1026-1032
- **P. SAARENRINNE ; M. PIIRTO.** Turbulent kinetic energy dissipation rate estimation from PIV velocity vector fields. *Experiments in Fluids,* 2000, vol. 29, S300-S307